# EUROPÄISCHE PATENTSCHRIFT

(11) **EP 1 230 962 B1**
(45) Veröffentlichungstag und Bekanntmachung des Hinweises auf die Patenterteilung: **11.06.2003**
(21) Anmeldenummer: 01890287.4
(22) Anmeldetag: 09.10.2001
(51) Int. Cl.: A63G 21/22, B61B 3/00

(54) **Anlage zum Abfahren von Personen von einer Bergstation in eine Talstation**
Installation for moving persons from a mountain station into a valley station
Installation pour le transport de personnes d'une station haute vers une station en aval

(30) Priorität: 13.02.2001 AT 2162001
(43) Veröffentlichungstag der Anmeldung: 14.08.2002
(73) Patentinhaber: Innova Patent GmbH, 6960 Wolfurt (AT)
(72) Erfinder: Albrich, Reinhard, 6850 Dornbirn (AT)
(74) Vertreter: Atzwanger, Richard, Dipl.-Ing. Patentanwalt

(56) Entgegenhaltungen:
- EP-A- 1 026 061
- WO-A-96/22821
- WO-A-98/25678
- DE-C- 19 742 102
- US-A- 4 236 454
- US-A- 6 062 350

## Beschreibung

Die gegenständliche Erfindung betrifft eine Anlage zum Abfahren von Personen von einer Bergstation in eine Talstation mittels längs einer Schiene geführter Wagen, welche mit ersten von zwei zusammenwirkenden Elementen einer magnetoelektrischen Bremseinrichtung, insbesondere mit mindestens einem Permanentmagneten, ausgebildet sind, wobei die Führungschiene mit zweiten Elementen, insbesondere mit Bremsleisten aus elektrisch leitendem, nicht magnetisierbaren Material, wie Kupfer oder Aluminium, ausgebildet ist, welche mit den ersten Elementen der Bremseinrichtung zusammenwirken.

Um bei derartigen Anlagen, welche aus dem Stand der Technik, z.B. der EP 1 026 061 A2, bekannt sind, den Anforderungen auf Sicherheit des Betriebes zu entsprechen, muß einerseits jeder Wagen mit mindestens einer Bremseinrichtung ausgebildet sein, welche auf die Beladung des Wagens, nämlich das Gewicht der mindestens einen Person, welche mit dem jeweiligen Wagen abfährt, abgestimmt ist und muß andererseits eine Einrichtung vorgesehen sein, durch welche ein Aufeinanderfahren von hintereinander abfahrenden Wagen verhindert wird.

Diese Aufgaben werden erfindungsgemäß dadurch gelöst, daß jeder Wagen mit mindestens einem in Abhängigkeit von dessen Beladung verstellbaren ersten Element einer Betriebsbremse und mindestens einem während der Abfahrt aktivierbaren ersten Element einer Sicherheitsbremse ausgebildet ist. Durch die Verstellbarkeit der Betriebsbremse erfolgt eine Abstimmung der Wirkung der Betriebsbremse auf die jeweilige Beladung des Wagens. Durch die Sicherheitsbremse erfolgt eine Steuerung der abfahrenden Wagen dahingehend, daß während des Betriebes Kollisionen von hintereinander abfahrenden Wagen ausgeschlossen werden.

Nach einer bevorzugten Ausführungsform ist in der Bergstation eine Prüfstation angeordnet, durch welche das mindestens eine erste Element der Betriebsbremse einstellbar ist und durch welche die Wirksamkeit der ersten Elemente der Betriebsbremse sowie der Sicherheitsbremse überprüfbar sind. Vorzugsweise sind in der Prüfstation zwei den ersten Elementen der Bremseinrichtungen zugeordnete rotierbare Prüfscheiben aus elektrisch leitendem, nicht magnetisierbaren Material, insbesondere Kupfer oder Aluminium, weiters eine Einrichtung zur Verstellung des mindestens einen ersten Elementes der Betriebsbremse gegenüber der Lage der zugeordneten Prüfscheibe und zudem eine Einrichtung zur Verstellung des mindestens einen ersten Elementes der Sicherheitsbremse von dessen unwirksamer Stellung in dessen wirksame Stellung vorgesehen. Durch Rotation der Prüfscheiben gegenüber den ersten Elementen der Betriebsbremse und der Sicherheitsbremse sind in der Prüfstation die Wirksamkeit und die Funktionsfähigkeit der an den Wagen vorgesehenen ersten Elemente der Betriebsbremse und der Sicherheitsbremse überprüfbar.

Vorzugsweise sind weiters in der Prüfstation eine erste Einrichtung zur Messung des Gewichtes des beladenen Wagens, deren Ausgang an die Einrichtung zur Verstellung des mindestens einen ersten Elementes der Betriebsbremse gelegt ist, sowie eine zweite Einrichtung zur Messung der Wirksamkeit des mindestens einen ersten Elementes der Betriebsbremse vorgesehen.

Nach einer bevorzugten Ausführungsform sind die ersten Elemente der Bremseinrichtung paarweise, einander gegenüberliegend angeordnet, wobei sie sich seitlich außerhalb der Prüfscheiben bzw. der Bremsleisten befinden. Weiters sind vorzugsweise die Meßeinrichtungen durch Kraftaufnehmer, insbesondere durch Druckmeßdosen, gebildet.

Nach einer weiteren bevorzugten Ausführungsform ist das mindestens eine erste Element der Betriebsbremse insbesondere mittels einer Schraubspindel gegenüber dem Wagen verstellbar, wobei der Antrieb der Stelleinrichtung durch die erste Meßeinrichtung steuerbar ist. Weiters kann dem mindestens einen ersten Element der Sicherheitsbremse eine Auslöseeinrichtung zugeordnet sein, durch welche dieses von der unwirksamen Lage in die Betriebslage verstellbar ist. Dabei ist vorzugsweise die Auslöseeinrichtung durch eine weitere Stelleinrichtung, insbesondere eine Stellfeder, freigebbar. Vorzugsweise ist in der Prüfstation auch eine Einrichtung zur Verstellung des mindestens einen ersten Elementes der Sicherheitsbremse vorgesehen.

Nach einer bevorzugten Ausführungsform einer derartigen Anlage sind über den Verlauf der sich von der Bergstation in die Talstation erstreckenden Führungsschiene Geräte zur Überwachung, insbesondere zur Messung des Abstandes von zwei hintereinander abfahrenden Wagen, vorgesehen, durch welche die Einrichtungen zur Auslösung des ersten Elementes der Sicherheitsbremsen steuerbar sind.

Eine erfindungsgemäße Anlage ist nachstehend anhand der Zeichnung näher erläutert. Es zeigen:

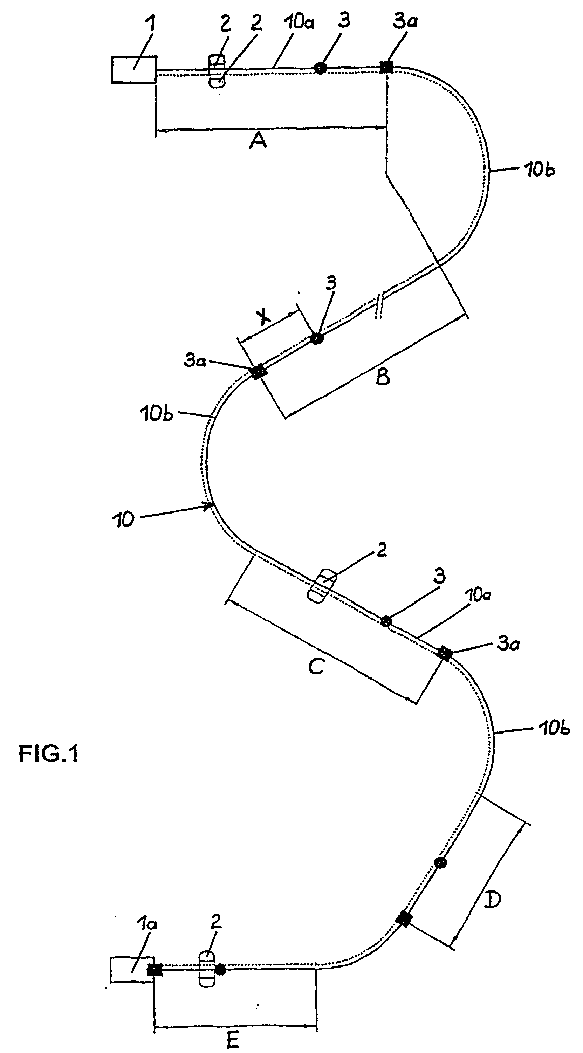

- Fig. 1: eine erfindungsgemäße Anlage, welche sich zwischen einer Bergstation und einer Talstation befindet, in schematischer Darstellung;
- Fig.2: eine in der Bergstation befindliche Prüfeinrichtung, in Seitenansicht;
- Fig.3: die Prüfeinrichtung, in gegenüber der Fig.2 vergrößertem Maßstab und in Seitenansicht;
- Fig.4: die Prüfeinrichtung, im Schnitt nach der Linie A-A der Fig. 3;
- die Fig.5 und 6: die längs der Strecke angeordneten Einrichtungen zum Auslösen der Sicherheitsbremse, in zwei Betriebsstellungen sowie in Seitenansicht, und
- Fig.7: einen auf der Strecke befindlichen Wagen, in Stirnansicht.

Eine erfindungsgemäße Anlage besteht aus einer Bergstation 1 und aus einer Talstation 1a, zwischen welchen sich eine durch Schienen gebildete, durchgehende Führungsbahn 10 befindet, welche von Stützen im Abstand vom Boden getragen ist und längs welcher Wagen 2 von der Bergstation 1 in die Talstation 1a abfahren können. Längs der Führungsbahn 10, welche mit einer Mehrzahl von geradlinigen Abschnitten 10a und zwischen diesen befindlichen Kurven 10b ausgebildet ist, sind jeweils vor den Kurven 10b Einrichtungen 3 zum Auslösen von Sicherheitsbremsen vorgesehen. Zudem befinden sich in Fahrtrichtung des Wagens 2 nach diesen Einrichtungen 3 weitere Einrichtungen 3a, durch welche die Wagen 2 zum Anhalten gebracht werden können.

Zwischen der Talstation 1a und der Bergstation 1 befindet sich weiters eine in der Zeichnung nicht dargestellte Anlage zum Fördern der nicht beladenen Wagen 2 von der Talstation 1a in die Bergstation 1.

Die Wagen 2 sind jeweils mit ersten Elementen von Betriebsbremsen und ersten Elementen von Sicherheitsbremsen ausgebildet, welchen längs der Führungsbahn 10 zweite Elemente der Betriebsbremsen und der Sicherheitsbremsen zugeordnet sind. Nach einer bevorzugten Ausführungsform befinden sich an den Wagen 2 in ihrer Lage verstellbare Permanentmagneten als erste Elemente der Betriebsbremse und der Sicherheitsbremse, welchen längs der Führungsbahn 10 angeordnete Bremsleisten aus einem elektrisch leitenden, nicht magnetisierbaren Material, insbesondere aus Kupfer und Aluminium, zugeordnet sind. Die Betriebsbremsen dienen dazu, die Abfahrgeschwindigkeit, welche mit dem Gewicht der betreffenden Person ansteigt, mit einem maximalen Wert von z.B. 20 km/h zu begrenzen. Die Sicherheitsbremsen dienen dazu, in besonderen Betriebsfällen die Geschwindigkeit der abfahrenden Wagen 2 zu vermindern oder sie zum Stillstand zu bringen, um Kollisionen von hintereinander abfahrenden Wagen 2 zu verhindern.

Die Führungsbahn 10 ist in eine Mehrzahl von geradlinigen Strecken, welche als Blöcke A, B, C, D und E bezeichnet sind, unterteilt, wobei diese Blöcke A, B, C, D und E über die gekrümmten Abschnitte 10b miteinander verbunden sind. In jedem der geradlinigen Abschnitte 10a befinden sich jeweils eine Einrichtung 3 zum Auslösen der Sicherheitsbremse sowie eine Stopeinrichtung 3a, welche Einrichtungen voneinander in einem solchen Abstand X angeordnet sind, daß die Geschwindigkeit des betreffenden Wagens 2 so stark vermindert wird, daß er bei der Stopeinrichtung 3a zum Anhalten gebracht werden kann.

In der Bergstation 1 werden die Wagen 2 jeweils von mindestens einer Person bestiegen. Hierauf fahren die Wagen 2 längs der Führungsschiene 10 von der Bergstation 1 in die Talstation 1a ab. Längs der Strecke sind Sensoren vorgesehen, durch welche die einzelnen Blöcke A bis E daraufhin überwacht werden, daß sich in jedem Block nur ein einziger Wagen 2 befindet, daß die Geschwindigkeit der Wagen 2 einen vorgegebenen maximalen Wert nicht überschreitet, daß in den Bereichen der Kurven 10b vorgegebene Geschwindigkeiten nicht überschritten werden und daß ein Aufeinanderfahren von hintereinander abfahrenden Wagen 2 verhindert wird. Durch diese Sensoren werden die Einrichtungen 3 gesteuert, durch welche die Sicherheitsbremsen aktiviert werden, durch welche die Geschwindigkeit der Wagen 2 stark vermindert wird. Durch diese Sensoren werden weiters die Einrichtungen 3a gesteuert, durch welche die Wagen 2 angehalten werden.

Sobald die Wagen 2 in der Talstation 1a angelangt sind, werden sie von den Benützern verlassen und werden sie wieder in die Bergstation 1 gefördert.

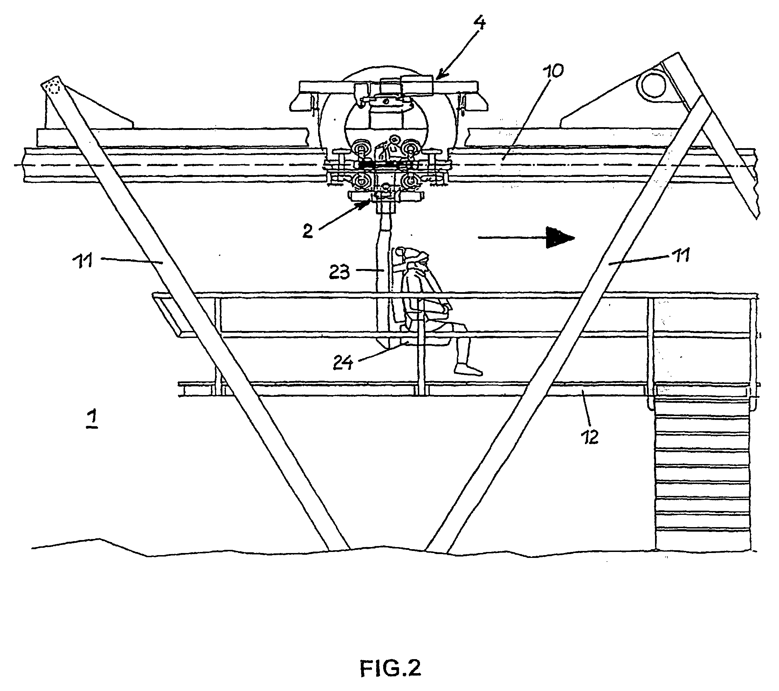

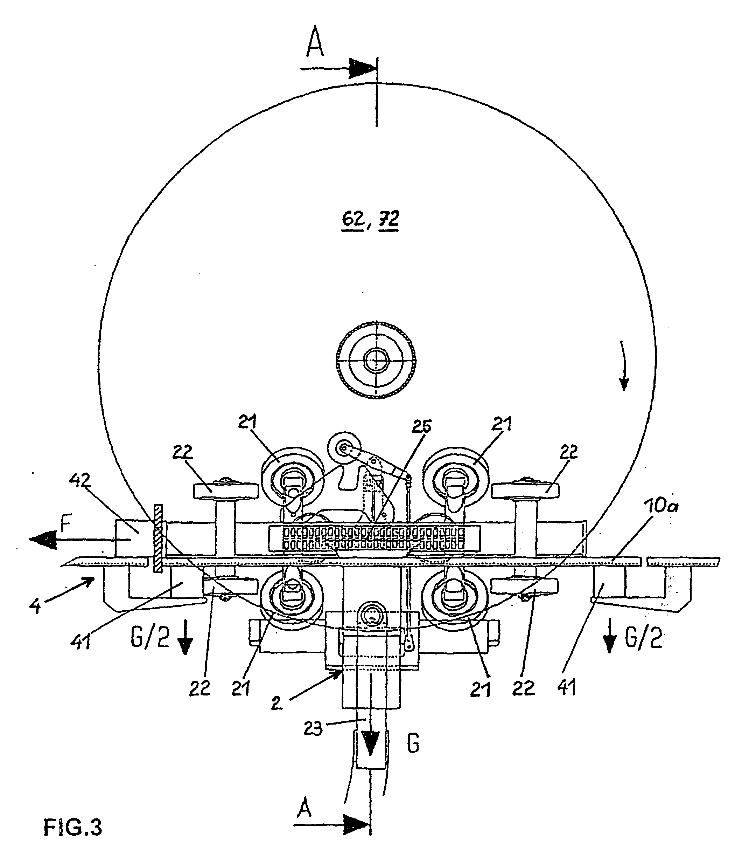

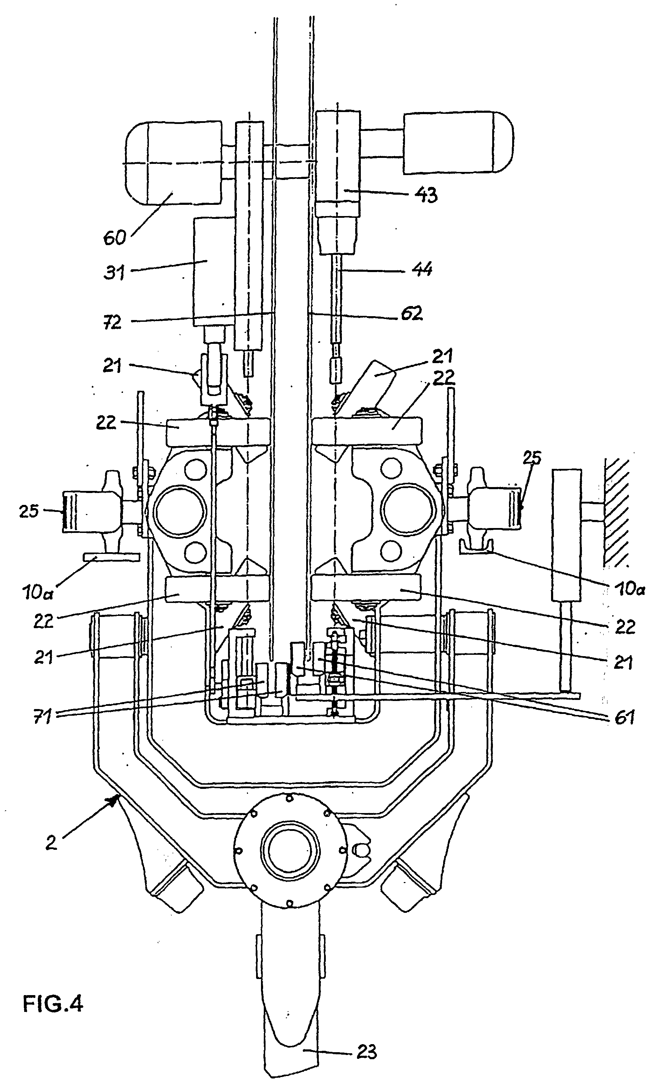

Wie dies aus Fig.2 ersichtlich ist, befinden sich in der Bergstation 1 Stützen 11, von welchen die die Fahrbahn 10 bildende Schiene getragen ist und weiters eine Plattform 12, von welcher die Personen z.B. auf Sessel 24 gelangen, welche mittels Tragstangen 23 an den Wagen 2 angelenkt sind. Weiters befindet sich in der Bergstation 1 eine Prüfeinrichtung 4, welche nachstehend anhand der Fig. 3 und 4 erläutert ist.

Die Wagen 2 sind mit mehreren Paaren von Laufrädern 21 und von Führungsrädern 22, mit einer mit Dämpfungselementen versehenen kardanischen Aufhängung für die Tragstange 23 und mit Reibflächen 25 ausgebildet. In den Stationen 1 und 1a sind den Reibflächen 25 Förderrollen zugeordnet, durch welche die Wagen 2 bewegt werden.

Im Bereich der Prüfeinrichtung 4, in welchem die Führungsschiene 10 unterbrochen ist, sind Hilfsschienen 10a vorgesehen, welchen zwei erste Druckmeßdosen 41 zugeordnet sind, durch welche das Gewicht G der beladenen Wagen 2 meßbar ist. Zudem ist eine zweite Druckmeßdose 42 vorgesehen, durch welche die Funktionsfähigkeit der Betriebsbremse und der Sicherheitsbremse meßbar ist. Die Ausgänge der Druckmeßdosen 41 sind an eine Einrichtung 43 zur Verstellung der am Wagen 2 angeordneten ersten Elemente, insbesondere Permanentmagneten 61, der Betriebsbremse, angelegt. Durch diese Einrichtung 43 sind mittels einer Schraubspindel 44 die ersten Elemente 61 der Betriebsbremse in ihrer Höhenlage einstellbar, um die Anpassung der Wirkung der Betriebsbremse an das Gewicht G des jeweiligen beladenen Wagens 2 zu erzielen.

Weiters befinden sich an den Wagen 2 erste Elemente 71 einer Sicherheitsbremse, welche Elemente 71 mittels einer Steuereinrichtung 31 von einer Außerbetriebslage in die Betriebslage verstellbar sind. Den ersten Elementen 61 und 71 der Betriebsbremse und der Sicherheitsbremse sind in der Prüfstation 4 durch einen Motor 60 antreibbare Testscheiben 62 und 72 zugeordnet.

Nach der Einstellung der Höhenlage der ersten Elemente 61 der Betriebsbremse und somit gegenüber der zugeordneten Testscheibe 62, wird durch den Motor 60 die Testscheibe 62 zugleich mit der den ersten Elementen 71 der Sicherheitsbremse zugeordneten Testscheibe 72 in Rotation versetzt, wodurch auf den Wagen 2 in dessen Bewegungsrichtung eine Schubkraft F ausgeübt wird, welche durch die zweite Druckmeßdose 42 erfaßbar ist. Hierdurch wird die Wirksamkeit der Betriebsbremse unter Berücksichtigung der Beladung G des Wagens 2 gemessen. In weiterer Folge werden mittels der Steuereinrichtung 31 die ersten Elemente 71 der Sicherheitsbremse in ihre Betriebslage verstellt, wodurch durch die diesen zugeordnete Testscheibe 72, welche sich in Rotation befindet, auf die Wagen 2 eine weitere Schubkraft ausgeübt wird, welche gleichfalls durch die zweite Druckmeßdose 42 erfaßbar ist. Hierdurch kann auch die Wirksamkeit der Sicherheitsbremse überprüft werden.

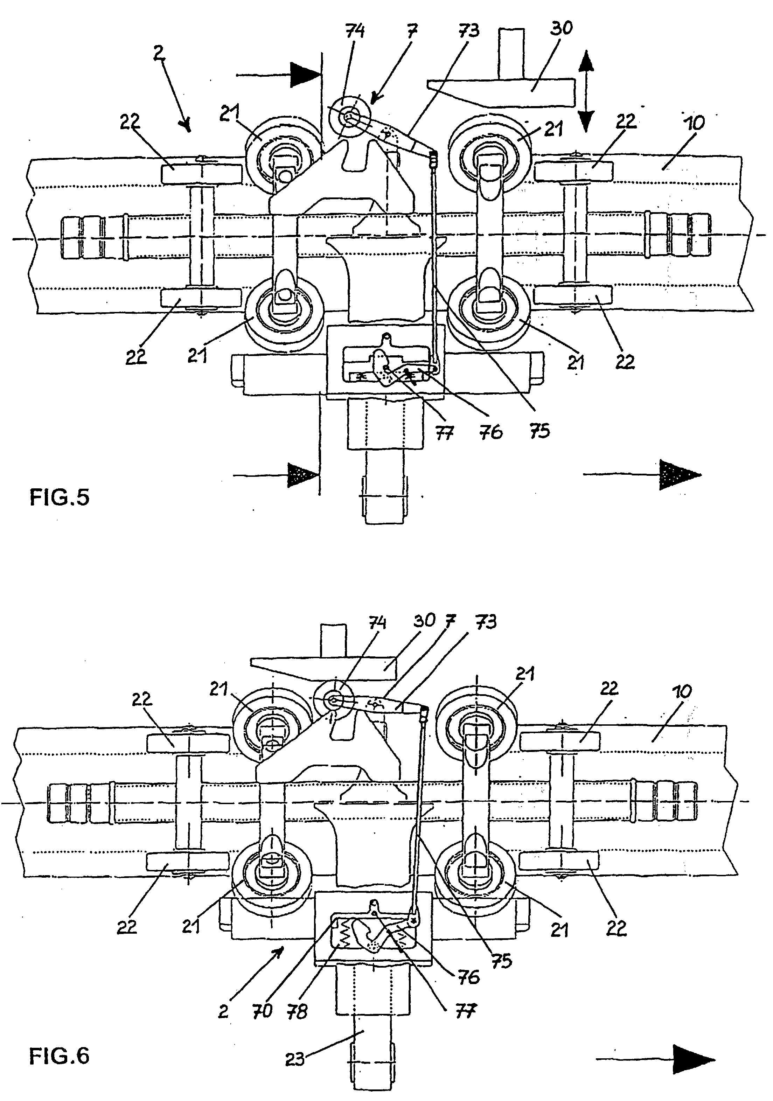

Jeder Wagen 2 ist weiters mit einer Einrichtung ausgebildet, durch welche die ersten Elemente 71 der Sicherheitsbremse von ihrer unwirksamen Lage in ihre wirksame Lage verstellbar sind. Diese Einrichtung ist nachstehend anhand der Fig. 5 und 6 näher erläutert. Wie dies aus Fig. 5 ersichtlich ist, sind für die Auslösung der Sicherheitsbremse längs der Fahrschiene 10 in ihrer Lage gegenüber den Wagen 2 einstellbare Anschläge 30 vorgesehen, welchen an den Wagen 2 Auslöseeinrichtungen 7 zugeordnet sind. Die Auslöseeinrichtungen 7 bestehen aus einem doppelarmigen Hebel 73, welcher an einem Ende mit einer Rolle 74 ausgebildet ist, welche den Anschlägen 30 zugeordnet ist. An das andere Ende des Hebels 73 ist eine Zugstange 75 angelenkt, welche mit einem Rasthaken 76 gekuppelt ist. In seiner Ausgangsstellung verriegelt der Rasthaken 76 einen Bolzen 77, welcher von einem Träger 70 für die ersten Bremselemente 71 abragt, wodurch dieser in derjenigen Lage gehalten ist, in welcher die ersten Bremselemente 71 unwirksam sind. Sobald die Rolle 74 auf einen der Anschläge 30 aufläuft, werden der Hebel 73 und über die Zugstange 74 auch der Rasthaken 75 im Gegenuhrzeigersinn verschwenkt, wodurch der Bolzen 77 freigegeben wird. Hierauf wird der Träger 70 für die ersten Bremselemente 71 unter der Wirkung einer Feder 78 in seine Betriebslage verstellt, wodurch die Sicherheitsbremse wirksam wird. Diese Lage des Rasthakens 76 und des Trägers 70 für die Bremselemente 71 ist in der Fig. 6 dargestellt.

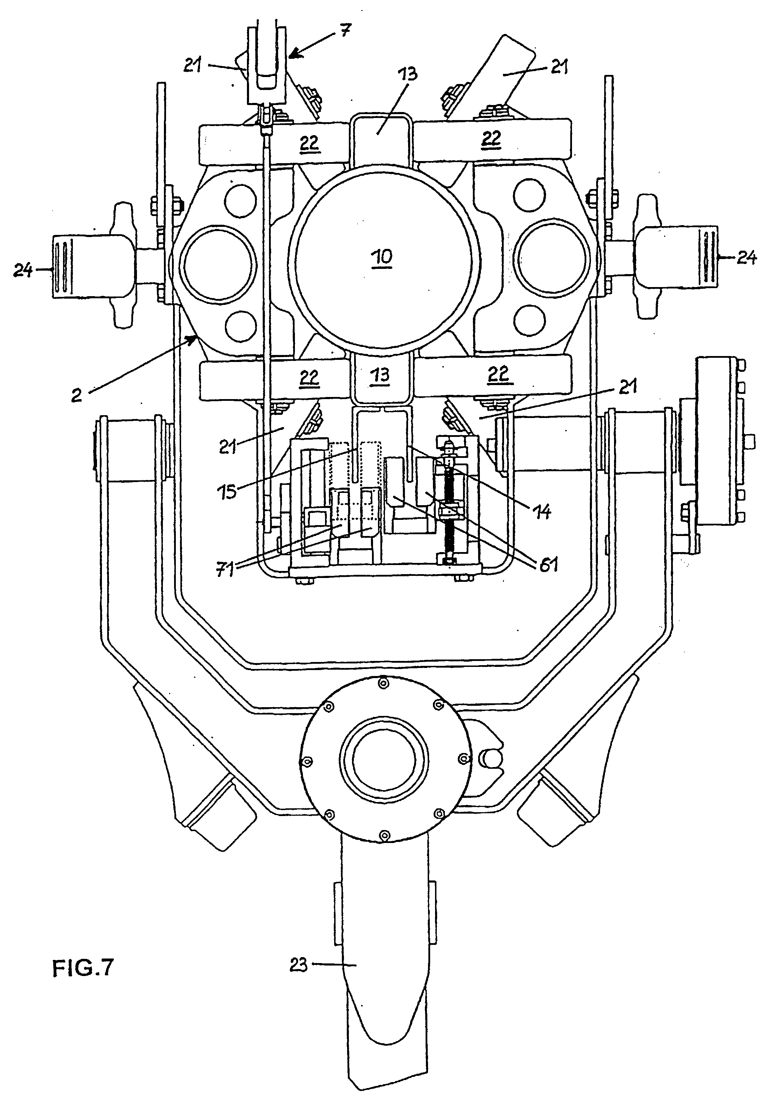

Wie dies weiters aus Fig.7 ersichtlich ist, ist die Führungsschiene 10, welche im Querschnitt kreisförmig oder hexagonal ausgebildet ist, mit zwei diagonal gegenüber liegenden, im Querschnitt angenähert quadratischen Fortsätzen 13 ausgebildet, deren Seitenwände den Führungsrollen 22 des Wagens 2 zugeordnete Führungsflächen bilden.

Vom unteren Fortsatz 13 ragen zwei Leisten 14 und 15 ab, welche aus elektrisch leitendem, nicht magnetisierbaren Material, insbesondere Kupfer oder Aluminium, hergestellt sind und welchen die Paare der ersten Bremselemente 61 und 71 der Betriebsbremse und der Sicherheitsbremse zugeordnet sind. Da die Bremselemente 61 in der Prüfstation 4 in Abhängigkeit von der Beladung des Wagens 2 in ihrer Höhenlage verstellt worden sind, bilden sie somit im Zusammenwirken mit der Leiste 14 eine Betriebsbremse, durch welche die Geschwindigkeit des Wagens 2 mit einem vorgegebenen Wert begrenzt wird. Die Bremselemente 71, welche in ihrer unwirksamen Lage dargestellt sind, wobei deren wirksame Lage strichliert ist, bilden zusammen mit der Leiste 15 eine Sicherheitsbremse, durch welche die Geschwindigkeit des betreffenden Wagens 2 auf einen sehr geringen Wert herabgesetzt wird. Die Auslösung der Sicherheitsbremse erfolgt durch die der längs der Strecke angeordneten Einrichtungen 3, welche mit den Anschlägen 30 ausgebildet sind, durch deren Verstellung die Auslöseeinrichtungen 7 steuerbar sind. Die Einrichtungen 3 werden dann wirksam, wenn der Abstand von zwei hintereinander abfahrenden Wagen 2 einen Mindestwert unterschreitet. Soferne ein Wagen 2 infolge eines Defektes zum Stillstand kommt, werden die nachfolgenden Wagen 2 durch die Stopeinrichtungen 3a angehalten. Sobald die Sicherheitsbremse aktiviert wurde, fährt der Wagen 2 mit einer nur geringen Geschwindigkeit zur Talsation 1a ab. Es können jedoch auch Einrichtungen vorgesehen werden, durch welche die Sicherheitsbremse dadurch, daß die Bremselemente 71 wieder in ihre unwirksame Lage zurückverstellt werden, ausgeschaltet wird.

## Patentansprüche

1. Anlage zum Abfahren von Personen von einer Bergstation in eine Talstation mittels längs einer Schiene (10) geführter Wagen (2), welche mit ersten von zwei zusammenwirkenden Elementen einer magnetoelektrischen Bremseinrichtung, insbesondere mit mindestens einem Permanentmagneten (61), ausgebildet sind, und die Führungsschiene (10) mit den zweiten Elementen, insbesondere Bremsleisten (14) aus elektrisch leitendem, nicht magnetisierbaren Material, wie Kupfer oder Aluminium, ausgebildet sind, weiche mit den ersten Elementen der Bremseinrichtung zusammenwirken, **dadurch gekennzeichnet, daß** jeder Wagen (2) mit mindestens einem in Abhängigkeit von dessen Beladung verstellbaren ersten Element (61) einer Betriebsbremse und mit mindestens einem während der Abfahrt aktivierbaren ersten Element (71) einer Sicherheitsbremse ausgebildet ist.

2. Anlage nach Patentanspruch 1, **dadurch gekennzeichnet, daß** in der Bergstation eine Prüfstation (4) angeordnet ist, in welcher das mindestens eine erste Element (61) der Betriebsbremse einstellbar ist und die Wirksamkeit der ersten Elemente (61, 71) der Betriebsbremse sowie der Sicherheitsbremse überprüfbar sind.

3. Anlage nach Patentanspruch 2, **dadurch gekennzeichnet, daß** in der Prüfstation (4) zwei den ersten Elementen (61, 71) der Bremseinrichtungen zugeordnete rotierbare Prüfscheiben (62, 72) aus elektrisch leitendem, nicht magnetisierbaren Material, insbesondere Kupfer oder Aluminium, eine Einrichtung (43) zur Verstellung des mindestens einen ersten Elementes (61) der Betriebsbremse gegenüber der Lage der zugeordneten Prüfscheibe (62) und eine Einrichtung (31) zur Verstellung des mindestens einen ersten Elementes (71) der Sicherheitsbremse von dessen unwirksamer Stellung in dessen wirksame Stellung vorgesehen sind.

4. Anlage nach einem der Patentansprüche 2 und 3, **dadurch gekennzeichnet, daß** in der Prüfstation (4) eine erste Einrichtung (41) zur Messung des Gewichtes der beladenen Wagen (2) vorgesehen ist, deren Ausgang an die Einrichtung (43) zur Verstellung des mindestens einen ersten Elementes (61) der Betriebsbremse gelegt ist .

5. Anlage nach einem der Patentansprüche 2 bis 4, **dadurch gekennzeichnet, daß** in der Prüfstation (4) eine zweite Einrichtung (42) zur Messung der Wirksamkeit der mindestens einen ersten Elemente (61, 71) der Betriebsbremse und der Sicherheitsbremse vorgesehen sind .

6. Anlage nach einem der Patentansprüche 2 bis 4, **dadurch gekennzeichnet, daß** die ersten Elemente (61, 71) der Bremseinrichtungen paarweise, einander gegenüberliegend angeordnet sind, wobei sie sich seitlich außerhalb der Prüfscheiben (62, 72) bzw. der Bremsleisten (14, 15) befinden.

7. Anlage nach einem der Patentansprüche 4 bis 6, **dadurch gekennzeichnet, daß** die Meßeinrichtungen durch Kraftaufnehmer, insbesondere Druckmeßdosen (41, 42), gebildet sind.

8. Anlage nach einem der Patentansprüche 2 bis 7, **dadurch gekennzeichnet, daß** das mindestens eine erste Element (61) der Betriebsbremse, insbesondere mittels einer Schraubspindel (44), gegenüber dem Wagen (2) verstellbar ist, wobei der Antrieb (43) der Stelleinrichtung (44) durch die erste Meßeinrichtung (41) steuerbar ist.

9. Anlage nach einem der Patentansprüche 1 bis 8, **dadurch gekennzeichnet, daß** dem mindestens einen ersten Element (71) der Sicherheitsbremse eine Auslöseeinrichtung (7) zugeordnet ist, durch welche dieses von der unwirksamen Lage in die wirksame Lage verstellbar ist.

10. Anlage nach Anspruch 9, **dadurch gekennzeichnet, daß** durch die Auslöseeinrichtung eine Stelleinrichtung, insbesondere eine Stellfeder (78), freigebbar ist .

11. Anlage nach einem der Patentansprüche 2 bis 10, **dadurch gekennzeichnet, daß** in der Prüfstation (4) eine Einrichtung (31) zur Verstellung des mindestens einen ersten Elementes (71) der Sicherheitsbremse vorgesehen ist.

12. Anlage nach einem der Patentansprüche 1 bis 11, **dadurch gekennzeichnet, daß** über den Verlauf der sich von der Bergstation (1) in die Talstation (1a) erstreckenden Führungsschiene (10) Geräte (3, 3a) zur Überwachung, insbesondere zur Messung des Abstandes von zwei hintereinander abfahrenden Wagen (2), vorgesehen sind, durch welche die Einrichtungen (3, 3a) zur Verstellung der ersten Elemente (71) der Sicherheitsbremsen steuerbar sind.

## Claims

1. An installation for moving persons down from a mountain station to a valley station by means of carriages (2) guided along a rail (1), which carriages (2) are provided with the first ones of two interacting elements of a magneto-electric braking device, in particular with at least one permanent magnet (61), the guide rail (10) being provided with the second elements, in particular braking strips (14) of electrically conductive, non-magnetisable material, such as copper or aluminium, which interact with the first elements of the braking device, **characterised in that** each carriage (2) is provided with at least one first element (61) of a service brake, adjustable as a function of the loading of said carriage, and at least one first element (71) of a safety brake activatable during descent.

2. An installation according to claim 1, **characterised in that** a testing station (4) is arranged in the mountain station, in which testing station (4) the at least one first element (61) of the service brake may be adjusted and the efficacy of the first elements (61, 71) of the service brake and the safety brake may be checked.

3. An installation according to claim 2, **characterised in that** in the testing station (4) there are provided two rotatable testing disks (62, 72) of electrically conductive, non-magnetisable material, in particular copper or aluminium, associated with the first elements (61, 71) of the braking devices, a device (43) for adjusting the at least one first element (61) of the service brake relative to the position of the associated testing disk (62) and a device (31) for adjusting the at least one first element (71) of the safety brake from the inactive position thereof into the active position thereof.

4. An installation according to one of claims 2 and 3, **characterised in that** there is provided in the testing station (4) a first device (41) for measuring the weight of the laden carriage (2), whose output is applied to the device (43) for adjusting the at least one first element (61) of the service brake.

5. An installation according to one of claims 2 to 4, **characterised in that** there is provided in the testing station (4) a second device (42) for measuring the efficacy of the at least one first elements (61, 71) of the service brake and the safety brake.

6. An installation according to one of claims 2 to 4, **characterised in that** the first elements (61, 71) of the braking devices are arranged in pairs opposite one another, wherein they are located laterally outside the testing disks (62, 72) or the braking strips (14, 15).

7. An installation according to one of claims 4 to 6, **characterised in that** the measuring devices take the form of force transducers, in particular of pressure pickups (41, 42).

8. An installation according to one of claims 2 to 7, **characterised in that** the at least one first element (61) of the service brake may be adjusted relative to the carriage (2) in particular by means of a jack screw (44), wherein the drive (43) of the adjusting device (44) may be controlled by the first measuring device (41).

9. An installation according to one of claims 1 to 8, **characterised in that** a trigger device (7) is associated with the at least one first element (71) of the safety brake, by means of which trigger device (7) said first element may be adjusted from the inactive position into the service position.

10. An installation according to claim 9, **characterised in that** an adjusting device, in particular an adjusting spring (78), may be adjusted by the trigger device.

11. An installation according to one of claims 2 to 10, **characterised in that** a device (31) for adjusting the at least one first element (71) of the safety brake is provided in the testing station (4).

12. An installation according to one of claims 1 to 11, **characterised in that** apparatuses (3, 3a) for monitoring, in particular for measuring, the spacing between two consecutively descending carriages (2) are provided over the course of the guide rail (10) extending from the mountain station (1) to the valley station (1a), by means of which apparatuses the devices (3, 3a) for adjusting the first elements (71) of the safety brakes may be controlled.

## Revendications

1. Installation pour faire descendre des personnes d'une station haute vers une station en aval au moyen de chariots (2) conduits le long d'un rail (10), qui sont conçus avec les premiers de deux éléments concourants d'un dispositif de freinage magnétoélectrique, en particulier avec au moins un aimant permanent (61), et le rail de guidage (10) étant conçu avec les deuxièmes éléments, en particulier des barres de freinage (14) fabriquées dans un matériau conducteur d'électricité, non magnétisable comme le cuivre ou l'aluminium, qui sont concourants avec les premiers éléments du dispositif de freinage, **caractérisée en ce que** chaque chariot (2) est conçu avec au moins un premier élément (61) d'un frein de service, élément qui est réglable en fonction de la charge du chariot et avec au moins un premier élément (71) d'un frein de sécurité, élément pouvant être activé pendant la descente.

2. Installation selon la revendication 1, **caractérisée en ce que** dans la station haute est placée une station de contrôle (4), dans laquelle au moins l'un des premiers éléments (61) du frein de service peut être réglé et l'efficacité des premiers éléments (61, 71) du frein de service ainsi que du frein de sécurité peut être vérifiée.

3. Installation selon la revendication 2, **caractérisée en ce que** sont prévus dans la station de contrôle (4) deux disques de test (62, 72) rotatifs affectés aux premiers éléments (61, 71) des dispositifs de freinage, faits dans un matériau conducteur d'électricité, non magnétisable, en particulier le cuivre ou l'aluminium pour régler au moins l'un des premiers éléments (61) du frein de service selon la position des disques de test (62) affectés et un dispositif (31) pour régler au moins l'un des premiers éléments (71) du frein de sécurité de sa position ineffective vers sa position effective.

4. Installation selon l'une des revendications 2 et 3, **caractérisée en ce que** dans la station de contrôle (4) un premier dispositif (41) est prévu pour mesurer, le poids du chariot chargé (2), dont la sortie est reliée au dispositif (43) pour régler au moins l'un des premiers éléments (61) du frein de service.

5. Installation selon l'une des revendications 2 à 4, **caractérisée en ce que** dans la station de contrôle (4) un second dispositif (42) est prévu pour mesurer l'efficacité d'au moins un des premiers éléments (61, 71) du frein de service et du frein de sécurité.

6. Installation selon l'une des revendications 2 à 4, **caractérisée en ce que** les premiers éléments (61, 71) des dispositifs de freinage sont placés par paires les uns face aux autres, se situant latéralement à l'extérieur des disques de test (62, 72) ou des barres de freinage (14, 15).

7. Installation selon l'une des revendications 4 à 6, **caractérisée en ce que** les dispositifs de mesure sont formés par des récepteurs de force, en particulier des boîtes dynamométriques (41, 42).

8. Installation selon l'une des revendications 2 à 7, **caractérisée en ce qu'**au moins l'un des premiers éléments (61) du frein de service peut être réglé au moyen d'un arbre fileté (44), face au chariot, l'entraînement (43) du dispositif de réglage (44) pouvant être piloté par le premier dispositif de mesure (41).

9. Installation selon l'une des revendications 1 à 8, **caractérisée en ce qu'**est affecté à l'un au moins des premiers éléments (71) du frein de sécurité un dispositif déclencheur (7), par lequel cet élément est réglable de sa position ineffective à sa position effective.

10. Installation selon la revendication 9, **caractérisée en ce que** grâce au dispositif déclencheur un dispositif de réglage, en particulier un ressort de réglage (78), peut être libéré.

11. Installation selon l'une des revendications 2 à 10, **caractérisée en ce que** dans la station de contrôle (4) est prévu un dispositif (31) pour régler au moins un des premiers éléments (71) du frein de sécurité.

12. Installation selon l'une des revendications 2 à 11, **caractérisée en ce que** sur le parcours des rails de guidage (10) s'étendant de la station haute (1) à la station en aval (la) des instruments (3, 3a) sont prévus pour la surveillance, en particulier pour la mesure de la distance entre deux chariots (2) descendant l'un après l'autre, grâce auxquels peuvent être pilotés les dispositifs (3, 3a) pour le réglage du premier élément (71) des freins de sécurité.
